# EUROPEAN PATENT SPECIFICATION

(11) **EP 2 546 905 B1**
(45) Date of publication and mention of the grant of the patent: **19.10.2016**
(21) Application number: 12173687.0
(22) Date of filing: 26.06.2012
(51) Int. Cl.: H01M 2/16, H01M 10/04, H01M 10/058, H01M 10/02, H01M 10/42

(54) **Secondary battery**
Sekundärbatterie
Batterie secondaire

(30) Priority: 12.07.2011 US 201161507080 P; 31.05.2012 US 201213485648
(43) Date of publication of application: 16.01.2013
(73) Proprietor: Samsung SDI Co., Ltd., Giheung-gu Yongin-si, Gyeonggi-do (KR)
(72) Inventor: Ahn, Chang Bum, Gyeonggi-do (KR)
(74) Representative: Walaski, Jan Filip

(56) References cited:
- EP-A1- 2 048 734
- EP-A1- 2 325 925
- EP-A2- 1 998 401

## Description

The present invention relates to a secondary battery, and more particularly, to a secondary battery having improved safety.

Recently, secondary batteries are widely used as power supplies for portable electronic equipment.

Further, as portable electronic equipment is used in various fields, there is a rapidly increasing demand for a secondary battery with high capacity. Accordingly, extensive studies are conducted to improve safety of secondary batteries.

An aspect of the present invention is to provide a secondary battery which prevents a positive plate and a negative plate from short-circuiting. Another aspect of the present invention is to provide a secondary battery which is stably used at high temperature. Still another aspect of the present invention is to provide a secondary battery in which a positive plate and a negative plate are easily aligned.

EP2048734 discloses an electrode assembly for a secondary battery having a ceramic layer extending over the ends of coated portions of the electrode.

According to an aspect of the present invention, there is provided an electrode assembly for a secondary battery according to claim 1.

Embodiments of the electrode assembly may comprise a first electrode having a first active material coated part and a first uncoated part that is not coated with active material, a second electrode having a second active material coated part and a second uncoated part that is not coated with active material, a separator between the first and second electrodes and a ceramic layer on the first uncoated part in a region that corresponds to the second active material coated part. The ceramic layer is adjacent to the first active material coated part. The thickness of the ceramic layer is less than or equal to the thickness of the first active material layer.

The ceramic layer may be at least 30µm thick. The first electrode may comprise a substrate, wherein the first active material layer comprises active material layers on both surfaces of the substrate and the ceramic layer comprises ceramic material layers on both surfaces of the substrate.

The electrode assembly may further comprise first and second electrode tabs attached to the first and second uncoated parts respectively. The first and second uncoated parts may have protruding portions that function as electrode tabs.

The ceramic layer may be formed on the electrode tab that corresponds to the second electrode. The ceramic layer may extend from the first active material coated part beyond a perimeter of the separator. The ceramic layer may comprise at least one of Along, BaTiO₄, TiO₂ and SiO₂.

The ceramic layer may comprise a mixture of two materials selected from Al₂O₃, BaTiO₄, TiO₂ and SiO₂ in the ratio of 7:3 to 5:5.

The ceramic layer may be disposed along an interface between the active portion and the non-active portion of the first electrode.

The first electrode, the second electrode and the separator in the electrode assembly may be wound.

The first and second electrodes may comprise first and second plates that are alternately stacked with the separator disposed between them.

The accompanying drawings, together with the specification, illustrate exemplary embodiments of the present invention, and, together with the description, serve to explain the principles of the present invention.
FIG. 1 is an exploded perspective view of a secondary battery according to one embodiment of the present invention;
FIG. 2 illustrates a first plate, a second plate, and a separator disposed between the plates which constitute an electrode assembly of FIG. 1;
FIG. 3 is a side view of the positive plate according to the embodiment;
FIG. 4 is an exploded perspective view of a secondary battery according to another embodiment of the present invention; and
FIG. 5 illustrates a first plate, a second plate, and a separator disposed between the plates which constitute an electrode assembly of FIG. 4.

Hereinafter, the present invention will be described in detail with reference to the accompanying drawings.

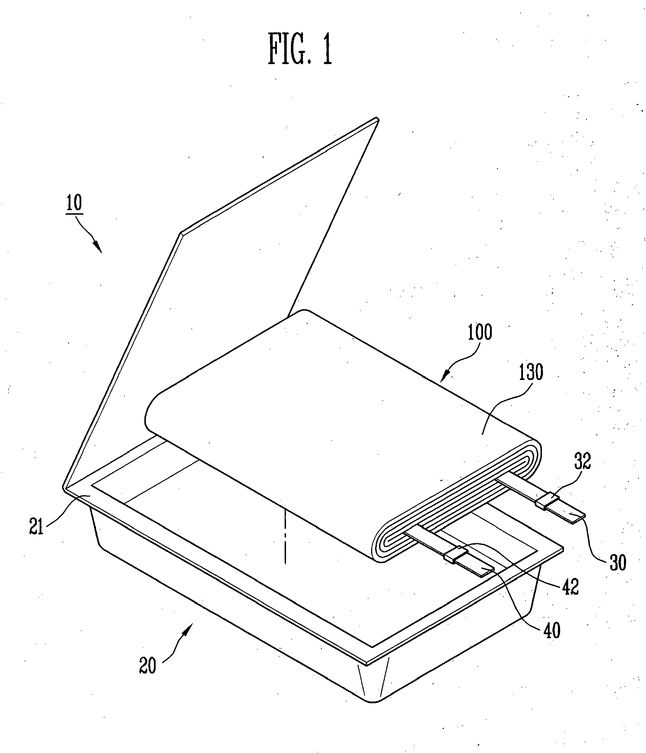

FIGS. 1 to 3 illustrate one exemplary embodiment of the present invention.

The secondary battery 10 according to the present embodiment includes an electrode assembly having a first plate 110 including an active material coated part 112 and a first non-applied, or uncoated, part 111, the active material coated part 112 being formed by coating a substrate with an active material; a second plate 120 disposed on the first plate 110 and including an active material coated part 122 and a second non-applied, or uncoated, part 121, the second active material coated part 122 being formed by coating a substrate with an active material; and a separator 130 disposed between the first plate 110 and the second plate 120, wherein the first non-applied part 111 includes a ceramic layer 50 in a corresponding position to the second plate 120.

The first non-applied part 111 and the second non-applied part 121 are portions of the first plate 110 and the second plate 120 which are not coated with active materials, respectively and which extend from the active material coated parts 112 and 122.

Referring to FIG. 1, the secondary battery 10 according to the present embodiment may be manufactured by accommodating the electrode assembly 100 and an electrolyte (not shown) in a battery case 20.

The battery case 20, for example a pouch, includes a body part accommodating the electrode assembly 100 and a cover covering the body part. A sealing part 21 is formed on an edge of the body part. The secondary battery 10 may be manufactured by accommodating the electrode assembly 100 and the electrolyte in the body part of the battery case 20 and then thermally fusing the sealing part 21 while closely attaching the cover to the body part.

Here, the first non-applied part 111 and the second non-applied part 121 of the electrode assembly 100 may be formed with a first electrode tab 30 and a second electrode tab 40, respectively. The first electrode tab 30 and the second electrode tab 40 are exposed to the outside through the sealing part 21 of the battery case 20. The first electrode tab 30 and the second electrode tab 40 may include lead films 32 and 42, respectively. The lead films 32 and 42 may be formed on a portion where the first electrode tab 30 and the second electrode tab 40 are in contact with the sealing part 21. The lead films 32 and 42 prevent a short circuit which may occur when the first electrode tab 30 and the second electrode tab 40 are thermally fused with the sealing part 21. Also, the lead films 32 and 42 improve adhesive strength between the electrode tabs 30 and 40 and the sealing part 21 to prevent leakage of the electrolyte.

The electrolyte includes lithium salts and a non-aqueous organic solvent, wherein the lithium salts function as a supply of lithium ions, and the non-aqueous organic solvent serves as a medium to enable ions involved in an electrochemical reaction to transfer.

Referring to FIG. 1, the electrode assembly 100 according to the present embodiment may be formed by winding the first plate 110, the second plate 120, and the separator 130 disposed between the plates.

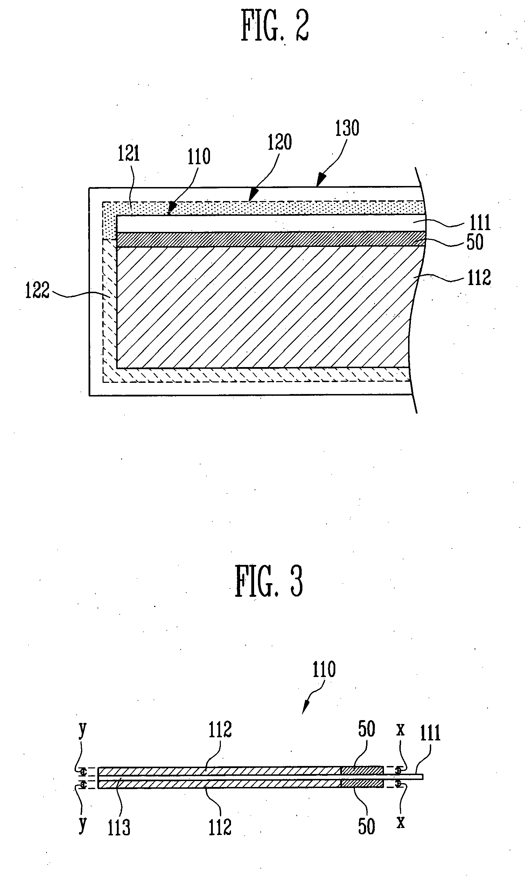

FIG. 2 illustrates the electrode assembly 100 of FIG. 1 not wound, in which the separator 130, the second plate 120, the separator 130, and the first plate 110 are sequentially stacked. Here, the first plate 110 and the second plate 120 may be stacked in different order. The stacked first and second plates 110 and 120 and the separator 130 interposed between the plates are wound into the electrode assembly 100 of the present embodiment.

The first plate 110 may be a positive plate. The positive plate includes a positive active material coated part 112 formed by coating a substrate with a positive active material and a non-applied part 111 not coated with the positive active material. Generally, the substrate may be any material which has high conductivity and does not cause chemical changes. The positive active material forming the positive active material coated part 112 may include a layered compound including lithium.

The second plate 120 may be a negative plate. The negative plate includes a negative active material coated part 122 formed by coating a substrate with a negative active material and a non-applied part 121 not coated with the negative active material. The substrate may be a conductive metal, and the negative active material forming the negative active material coated part 122 may include graphite. Hereinafter, for convenience, the first plate 110 is referred to as the positive plate and the second plate 120 is referred to as the negative plate, without being limited.

The separator 130 is disposed between the positive plate 110 and the negative plate 120 to prevent a short circuit due to direct contact between the plates 110 and 120.

Generally, the separator 130 is an insulating thin film having high ion permeability and high mechanical strength.

When the secondary battery 10 is exposed to high temperature, the separator 130 is contracted, so that the active material coated parts 112 and 122 of the positive plate 110 and the negative plate 120 may be exposed. Further, when a plurality of positive plates 10 and a plurality of negative plates 120 are stacked, the plates may not be properly aligned. In this case, when plates having different polarities are directly in contact with each other, a short circuit may occur. In particular, the non-applied part 111 of the positive plate 110 corresponding to the negative plate 120 may be vulnerable. To prevent this short circuit, the ceramic layer 50 may be further formed on the first non-applied part 111 adjacent to the active material coated part 112 of the positive plate 110.

Generally, a part of the first non-applied part 111 adjacent to the positive active material coated part 112 may be disposed to face the negative active material coated part 122 with the separator 130 disposed therebetween. In this case, when the separator 130 disposed between the plates is contracted or detached, the positive plate 110 and the negative plate 120 come in contact with each other to cause a short circuit. Thus, the first non-applied part 111 may include the ceramic layer 50 in a position corresponding to the negative active material coated part 122.

FIG. 3 is a side view of the positive plate 110 according to the present embodiment.

Referring to FIG. 3, the positive plate 110 includes the positive active material coated part 112 formed by coating upper and lower surfaces of the substrate 113 with the positive active material. Further, the positive plate 110 includes the first non-applied part 111 having the ceramic layer 50, and the ceramic layer 50 on the first non-applied part 111 may be formed on both upper and lower surfaces of the first non-applied part 111.

Further, the ceramic layer 50 may be formed along a boundary surface, or interface, between the positive active material coated part 112 of the positive plate 110 and the first non-applied part 111. The first non-applied part 111 may include the first electrode tab 30 (See FIG. 1) to be exposed from the first non-applied part 111 to the outside.

When the positive active material coated part 112 formed on the upper surface of the substrate 113 and the positive active material coated part 112 formed on the lower surface thereof have the same thickness, the thickness (x) of the ceramic layer 50 on the first non-applied part 111 may be 0.5 times a difference between the total thickness of the positive plate 110 and the thickness of the substrate 113. Generally, the thickness (x) of the ceramic layer 50 may be from 30 µm to the thickness (y) of the positive active material coated part 112 formed on the same surface of the substrate 113.

In a case that the thickness (x) of the ceramic layer 50 is less than 30 µm, the ceramic layer 50 does not have sufficient properties to stably prevent a short circuit between the positive plate 110 and the negative plate 120 and it is difficult to form the thickness uniformly, resulting in increase in process costs. In a case that the thickness (x) of the ceramic layer 50 is more than the thickness (y) of the positive active material coated part 112, when the positive plate 110, the negative plate 120, and the interposed separator 130 are stacked and wound, a part where the ceramic 130 is disposed has a relatively greater thickness. Accordingly, the plates are not properly aligned when winding. Further, as the plates are wound, the thickness of the ceramic layer 50 accumulates, which may disturb sealing the battery case 20. Accordingly, the electrolyte may leak. Thus, the thickness (x) of the ceramic layer 50 may be from 30 µm to the thickness (y) of the positive active material coated part 112 formed on the same surface of the substrate 113.

In the present embodiment, the thickness (y) of the positive active material coated part 112 formed on the upper surface of the substrate 113 is the same as the thickness (y) of the positive active material coated part 112 formed on the lower surface, but they may be different. When the thickness (y) of the positive active material coated part 112 is different on position, the thickness (x) of the ceramic layer 50 may be determined based on the thickness (y) of the positive active material coated part 112 formed on the same surface of the substrate 113.

The ceramic layer 50 may include, for example, at least one of Al₂O₃, BaTiO₄, TiO₂, and SiO₂. Here, the ceramic layer 50 may include a mixture of two materials among Al₂O₃, BaTiO₄, TiO₂, and Si02 at 7:3 or 5:5.

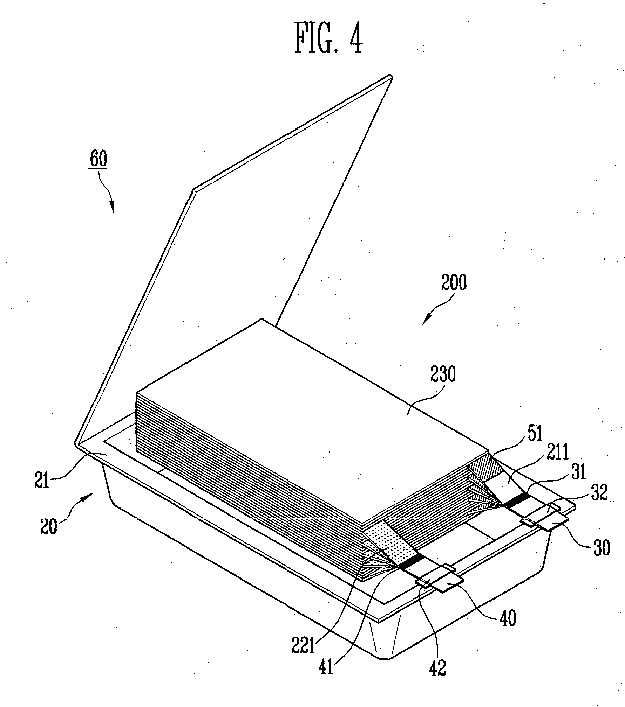

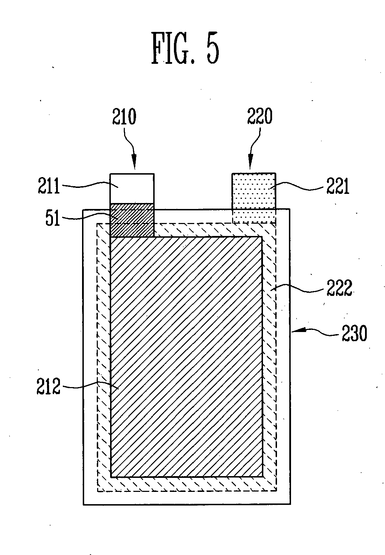

FIGS. 4 and 5 illustrate another exemplary embodiment of the present invention.

In the following description, details similar to those explained with reference to FIGS. 1 to 3 will be omitted.

FIG. 4 is an exploded perspective view of a secondary battery according to the other embodiment of the present invention; and FIG. 5 illustrates a first plate, a second plate, and a separator disposed between the plates which constitute an electrode assembly of FIG. 4.

The secondary battery 60 according to the present embodiment includes an electrode assembly 200 having a positive plate 210 including an active material coated part 212 and a first non-applied (uncoated) part 211, the active material coated part 212 being formed by coating a substrate with an active material; a negative plate 220 disposed on the positive plate 210 and including an active material coated part 222 and a second non-applied (uncoated) part 221, the second active material coated part 222 being formed by coating a substrate with an active material; and a separator 230 disposed between the positive plate 210 and the negative plate 220, wherein the first non-applied part 211 includes a ceramic layer 51 in a corresponding position to the negative plate 220.

The first non-applied part 211 and the second non-applied part 221 are portions of the positive plate 210 and the negative plate 220 which are not coated with active materials, respectively and may extend from the active material coated parts 212 and 222.

Here, the first non-applied part 211 and the second non-applied part 221 of the electrode assembly 200 may be formed to extend in a rectangular shape from the active material coated parts 212 and 222 of the positive plate and the negative plate 210 and 220 by punching using a mould. The punched first and second non-applied parts 211 and 221 are fused with first and second electrode tabs 30 and 40 having lead films 32 and 42 to form fused parts 31 and 41. For example, the first non-applied part 211 and the second non-applied part 221 may function as a first tab and a second tab of the positive plate 210 and the negative plate 220.

Referring to FIG. 4, the electrode assembly 200 of the present invention includes a plurality of positive plates 210 and a plurality of negative plates 220 which are stacked, with the separator 230 being disposed between the plates.

FIG. 5 illustrates a unit constituting the electrode assembly 200 of FIG. 4, and the electrode assembly 200 of the present invention is manufactured by stacking a plurality of units. In detail, each unit includes one negative plate 220, a positive plate 210 stacked over the negative plate 220, and a separator 230 interposed between the plates. Negative plates 220 and positive plates 210 are alternately stacked with a separator 230 interposed therebetween, thereby forming the secondary battery 60 according to the present embodiment. Here, the plates may be stacked in different order.

In this stacked structure, the first non-applied part 211 is a portion corresponding to the negative plate 220 and may be vulnerable to a short circuit. To prevent a short circuit, the first non-applied 211 corresponding to the negative plate 220 may include the ceramic layer 51. Here, a part of the first non-applied part 211 adjacent to the positive active material coated part 212 is disposed to face the negative active material coated part 222, with the separator 230 disposed therebetween, and thus is the most vulnerable to a short circuit. Thus, the ceramic layer 51 on the first non-applied part 211 may be formed adjacently to the positive active material coated part 212.

The ceramic layer 51 may have a different polarity from the negative plate 220 and be formed to cover a front part of the non-applied part 211 which is highly likely to come in contact with the negative plate 220 in order to prevent a short circuit with the negative plate 220. Further, a plurality of first non-applied parts 211 formed by stacking positive plates 210 may include a fused part 31, which is connected with the first electrode tab 30 through welding. The fused part 31 may be formed by laser welding or resistance welding. When the ceramic layer 51 is disposed on the fused part 31, it may be damaged while the first non-applied part 211 and the first electrode tab 30 are welded. Alternatively, the ceramic layer 51 may disturb fusion of the first non-applied part 211 and the first electrode tab 30. Thus, the ceramic layer 51 may be formed to cover the front part of the first non-applied part 211 except for the fused part 31 of the first non-applied part 211.

As described above, exemplary embodiments of the present invention provide a secondary battery which prevents a positive plate and a negative plate from short-circuiting to improve safety.

Further, there is provided a secondary battery which is stably used at high temperature without having ignition problems.

In addition, there is provided a secondary battery in which a positive plate and a negative plate are easily aligned to improve productivity.

While the present invention has been described in connection with certain exemplary embodiments, it is to be understood that the invention is not limited to the disclosed embodiments, but, on the contrary, is intended to cover various modifications and equivalent arrangements included within the scope of the appended claims.

## Claims

1. An electrode assembly for a secondary battery comprising:
a first electrode (110) having a first active material coated part (112, 212) and a first uncoated part (111, 211) that is not coated with active material;
a second electrode (120) having a second active material coated part (122, 222) and a second uncoated part (121, 221) that is not coated with active material;
a separator (130, 230) between the first and second electrodes; and
a ceramic layer (50, 51) on the first uncoated part, adjacent to the first active material coated part (112);
wherein the thickness x of the ceramic layer is less than or equal to the thickness y of the first active material layer.

2. The electrode assembly of claim 1, wherein the ceramic layer is at least 30µm thick.

3. The electrode assembly of claim 1 or 2, wherein the first electrode comprises a substrate (113), wherein the first active material layer comprises active material layers (112) on both surfaces of the substrate and the ceramic layer comprises ceramic material layers (50) on both surfaces of the substrate.

4. The electrode assembly of claim 1, 2 or 3, further comprising first and second electrode tabs (30, 40) attached to the first and second uncoated parts (111, 121) respectively.

5. The electrode assembly of claim 1, 2 or 3, wherein the first and second uncoated parts (211, 221) have protruding portions that function as electrode tabs.

6. The electrode assembly of claim 5, wherein the ceramic layer (51) is formed on the electrode tab that corresponds to the second electrode.

7. The electrode assembly of claim 5 or 6, wherein the ceramic layer (51) extends from the first active material coated part (212) beyond a perimeter of the separator (230).

8. The electrode assembly of any one of the preceding claims, wherein the ceramic layer comprises at least one of Al₂O₃, BaTiO₄, TiO₂ and SiO₂.

9. The electrode assembly of any one of the preceding claims, wherein the ceramic layer comprises a mixture of two materials selected from Al₂O₃, BaTiO₄, TiO₂ and SiO₂ in the ratio of 7:3 to 5:5.

10. The electrode assembly of any one of the preceding claims, wherein the first electrode, the second electrode and the separator in the electrode assembly are wound.

11. The electrode assembly of any one of claims 1 to 9, wherein the first and second electrodes comprise first and second plates that are alternately stacked with the separator disposed between them.

12. A secondary battery comprising an electrode assembly according to any one of the preceding claims.

## Patentansprüche

1. Elektrodenbaugruppe für eine Sekundärbatterie, umfassend:
eine erste Elektrode (110) mit einem ersten mit aktivem Material beschichteten Teil (112, 212) und einem ersten unbeschichteten Teil (111, 211), der nicht mit aktivem Material beschichtet ist;
eine zweite Elektrode (120) mit einem zweiten mit aktivem Material beschichteten Teil (122, 222) und einem zweiten unbeschichteten Teil (121, 221), der nicht mit aktivem Material beschichtet ist;
einen Separator (130, 230) zwischen der ersten und zweiten Elektrode; und
eine Keramikschicht (50, 51) auf dem ersten unbeschichteten Teil, die an den ersten mit aktivem Material beschichteten Teil (112) angrenzt;
wobei die Dicke x der Keramikschicht kleiner oder gleich der Dicke y der ersten Schicht aus aktivem Material ist.

2. Elektrodenbaugruppe nach Anspruch 1, wobei die Keramikschicht mindestens 30 µm dick ist.

3. Elektrodenbaugruppe nach Anspruch 1 oder 2, wobei die erste Elektrode ein Substrat (113) umfasst, wobei die erste Schicht aus aktivem Material Schichten aus aktivem Material (112) auf beiden Oberflächen des Substrats umfasst und die Keramikschicht Schichten aus Keramikmaterial (50) auf beiden Oberflächen des Substrats umfasst.

4. Elektrodenbaugruppe nach Anspruch 1, 2 oder 3, ferner umfassend eine erste und eine zweite Elektrodenfahne (30, 40), die an dem ersten bzw. zweiten unbeschichteten Teil (111, 121) befestigt sind.

5. Elektrodenbaugruppe nach Anspruch 1, 2 oder 3, wobei der erste und der zweite unbeschichtete Teil (211, 221) hervorstehende Abschnitte aufweisen, die als Elektrodenfahnen dienen.

6. Elektrodenbaugruppe nach Anspruch 5, wobei die Keramikschicht (51) auf der Elektrodenfahne ausgebildet ist, die der zweiten Elektrode entspricht.

7. Elektrodenbaugruppe nach Anspruch 5 oder 6, wobei sich die Keramikschicht (51) von dem ersten mit aktivem Material beschichteten Teil (212) über einen Umfang des Separators (230) hinaus erstreckt.

8. Elektrodenbaugruppe nach einem der vorhergehenden Ansprüche, wobei die Keramikschicht mindestens eines von Al₂O₃, BaTiO₄, TiO₂ und SiO₂ umfasst.

9. Elektrodenbaugruppe nach einem der vorhergehenden Ansprüche, wobei die Keramikschicht eine Mischung aus zwei Materialien, ausgewählt aus Al₂O₃, BaTiO₄, TiO₂ und SiO₂, im Verhältnis von 7:3 bis 5:5 umfasst.

10. Elektrodenbaugruppe nach einem der vorhergehenden Ansprüche, wobei die erste Elektrode, die zweite Elektrode und der Separator in der Elektrodenbaugruppe gewickelt sind.

11. Elektrodenbaugruppe nach einem der Ansprüche 1 bis 9, wobei die erste und die zweite Elektrode eine erste und eine zweite Platte umfassen, die abwechselnd gestapelt sind, wobei der Separator zwischen ihnen angeordnet ist.

12. Sekundärbatterie, umfassend eine Elektrodenbaugruppe nach einem der vorhergehenden Ansprüche.

## Revendications

1. Ensemble d'électrodes pour une batterie secondaire comprenant :
une première électrode (110) ayant une première partie revêtue de matériau actif (112, 212) et une première partie non revêtue (111, 211) qui n'est pas revêtue d'un matériau actif ;
une deuxième électrode (120) ayant une deuxième partie revêtue de matériau actif (122, 222) et une deuxième partie non revêtue (121, 221) qui n'est pas revêtue d'un matériau actif ;
un séparateur (130, 230) entre les première et deuxième électrodes ; et
une couche de céramique (50, 51) sur la première partie non revêtue, adjacente à la première partie revêtue de matériau actif (112) ;
où l'épaisseur x de la couche de céramique est inférieure ou égale à l'épaisseur y de la première couche de matériau actif.

2. Ensemble d'électrodes de la revendication 1, dans lequel la couche de céramique a une épaisseur d'au moins 30 µm.

3. Ensemble d'électrodes de la revendication 1 ou 2, dans lequel la première électrode comprend un substrat (113), dans lequel la première couche de matériau actif comprend des couches de matériau actif (112) sur les deux surfaces du substrat et la couche de céramique comprend des couches de matériau céramique (50) sur les deux surfaces du substrat.

4. Ensemble d'électrodes de la revendication 1, 2 ou 3, comprenant en outre des première et deuxième languettes d'électrode (30, 40) fixées aux première et deuxième parties non revêtues (111, 121), respectivement.

5. Ensemble d'électrodes de la revendication 1, 2 ou 3, dans lequel les première et deuxième parties non revêtues (211, 221) ont des parties saillantes qui fonctionnent en tant que languettes d'électrode.

6. Ensemble d'électrodes de la revendication 5, dans lequel la couche de céramique (51) est formée sur la languette d'électrode qui correspond à la deuxième électrode.

7. Ensemble d'électrodes de la revendication 5 ou 6, dans lequel la couche de céramique (51) s'étend depuis la première partie revêtue de matériau actif (212) au-delà d'un périmètre du séparateur (230).

8. Ensemble d'électrodes de l'une quelconque des revendications précédentes, dans lequel la couche de céramique comprend au moins l'un parmi : Al₂O₃, BaTiO₄, TiO₂ et SiO₂.

9. Ensemble d'électrodes de l'une quelconque des revendications précédentes, dans lequel la couche de céramique comprend un mélange de deux matériaux choisis parmi Al₂O₃, BaTiO₄, TiO₂ et SiO₂ dans une proportion de 7:3 à 5:5.

10. Ensemble d'électrodes de l'une quelconque des revendications précédentes, dans lequel la première électrode, la deuxième électrode et le séparateur dans l'ensemble d'électrodes sont enroulés.

11. Ensemble d'électrodes de l'une quelconque des revendications 1 à 9, dans lequel les première et deuxième électrodes comprennent des première et deuxième plaques qui sont empilées en alternance avec le séparateur disposé entre celles-ci.

12. Batterie secondaire comprenant un ensemble d'électrodes selon l'une quelconque des revendications précédentes.
